# EUROPÄISCHE PATENTANMELDUNG

(11) **EP 4 575 293 A2**
(43) Veröffentlichungstag der Anmeldung: **25.06.2025**
(21) Anmeldenummer: 24221098.7
(22) Anmeldetag: 18.12.2024
(51) Int. Cl.: F16L 25/02

(54) **GASDICHTE ISOLIERVERSCHRAUBUNG FÜR EINE ROHRLEITUNG**

(30) Priorität: 22.12.2023 DE 102023136595
(71) Anmelder: ISOflanges GmbH, 29308 Winsen (DE)
(72) Erfinder: Suckut, Claudia, 29308 Winsen (DE)
(74) Vertreter: Gerstein, Hans Joachim

(57) **Zusammenfassung**

Es wird eine gasdichte Isolierverschraubung (1) für eine Rohrleitung mit einem ersten Rohranschluss (2a) und einem gegenüberliegenden zweiten Rohranschluss (2b) beschrieben, wobei der erste Rohranschluss (2a) einen ersten Rohrleitungsabschnitt (3a) und einen von dem ersten Rohrleitungsabschnitt (3a) radial abragenden ersten Anschlusskragen (4a) und der zweite Rohranschluss (2a) einen zweiten Rohrleitungsabschnitt (3b) und einen von dem zweiten Rohrleitungsabschnitt (3b) radial abragenden zweiten Anschlusskragen (4b) aufweisen. Die beiden ersten und zweiten Anschlusskragen (4a, 4b) sind mit einem zwischenliegenden Isolierring (5) gegeneinander verspannt. Ein Innenrohr (8) aus einem elektrisch isolierenden Isolierstoffmaterial erstreckt sich in dem ersten und zweiten Rohranschluss (2a, 2b), wobei der erste und zweite Rohranschluss (2a, 2b) jeweils eine Stirnwand (9) an einer Durchmesserverringerung aufweisen und die einander gegenüberliegenden Enden des Innenrohrs (8) an den Stirnwänden (9) anliegen.

## Beschreibung

Die Erfindung betrifft eine gasdichte Isolierverschraubung für eine Rohrleitung mit einem ersten Rohranschluss und einem gegenüberliegenden zweiten Rohranschluss. Der erste Rohranschluss weist einen ersten Rohrleitungsabschnitt und einen von dem ersten Rohrleitungsabschnitt radial abragenden ersten Anschlusskragen und der zweite Rohranschluss einen zweiten Rohrleitungsabschnitt und einen von dem zweiten Rohrleitungsabschnitt einen radial abragenden ersten Anschlusskragen auf. Die beiden ersten und zweiten Anschlusskragen sind mit einem zwischenliegenden Isolierring gegeneinander verspannt.

Allgemein betrifft die Erfindung das Gebiet der elektrischen bzw. galvanischen Trennung von Rohrleitungssystemen, wie beispielsweise von Rohrleitungssystemen, bei denen ein kathodischer Korrosionsschutz Anwendung findet und bei denen Isoliertrennstellen zur elektrischen Trennung von Rohrleitungsabschnitten eingesetzt werden. Isoliertrennstellen sind elektrotechnische Schutzmaßnahmen zur Unterbrechung der metallischen Leitfähigkeit von Rohrleitungen. Bei einem kathodischen Korrosionsschutzsystem werden diese mit einem elektrischem Schutzstrom beaufschlagt. Solche Isoliertrennstellen werden zum Beispiel in Gas-, Öl-, Fernwärme- oder Wasser-Leitungssystemen, sowie in Steuerungs- / Dosierleitungen eingesetzt. Die Aufgabe einer Isoliertrennstelle ist es, die Rohrleitungen an bestimmten Stellen elektrisch oder galvanisch voneinander zu isolieren.

Für die Bildung einer Isoliertrennstelle sind verschiedene Bauarten, wie z.B. Isolierflansche und Isolierstücke bekannt.

Durch die mechanisch sehr robuste Auslegung von Isolierflanschen sind diese im Ergebnis relativ großbauend, d.h. sie haben umfangsseitig einen großen Platzbedarf. Daher eignen sich solche Isolierflansche nicht so gut für Rohrleitungen mit einem kleinen Durchmesser, z.B. für Präzisionsrohre, wie sie in der Steuerungstechnik eingesetzt werden. Bekannte Isolierstücke, die wie ein Rohrstück geformt sind, haben zwar weniger Platzbedarf, sind dafür aber mechanisch unzureichend belastbar.

US 1,783,410 beschreibt eine vibrationsarme Rohrverbindung mit einer Gummidichtung, die zwischen zwei Anschlussflanschen der Rohrabschnitte angeordnet ist und diese Anschlussflansche überlappt. Zwei Muffen sind mit Bolzen im radialäußeren Bereich miteinander verschraubt. Die Muffen nehmen im radial inneren Bereich die Gummidichtung und die Anschlussflansche zwischen sich auf.

DE 600 11 538 T2 offenbart eine dielektrische Rohrverbindung mit einer zweiteiligen Abdichtisolierung zur Isolierung gegen Streustrom. Ein erstes Teil der Abdichtisolierung wird zwischen die Kopfenden der Rohre und ein zweites Teil in den Rohren untergebracht. Die Verbindung der Rohre erfolgt durch Verschweißen eines Kopfendes mit einem Ring oder durch Umbiegen eines Kopfendes.

Aufgabe der vorliegenden Erfindung ist es, eine verbesserte gasdichte Isolierverschraubung für eine Rohrleitung zu schaffen, insbesondere eine elektrisch isolierende Verschraubung von zwei Rohranschlüssen, die bei einem einfachen und kompakten Aufbau auch bei hochflüchtigen Gasen, wie Wasserstoff, eine zuverlässige Gasdichtigkeit und elektrische Isolierung sicherstellen.

Die Aufgabe wird durch die gasdichte Isolierverschraubung mit den Merkmalen des Anspruchs 1 und 7 gelöst. Vorteilhafte Ausführungsformen sind in den Unteransprüchen beschrieben.

Es ist vorgesehen, dass sich ein Innenrohr aus einem elektrisch isolierenden Isolierstoffmaterial in dem ersten und zweiten Rohranschluss erstreckt, wobei der erste und zweite Rohranschluss jeweils eine Stirnwand an einer Durchmesserverringerung aufweisen und die einander gegenüberliegenden Enden des Innenrohrs an den Stirnflächen anliegen.

Mit Hilfe des Innenrohres wird eine vom Anschlusskragen isolierte Durchführungsleitung bereitgestellt, die an ihren Enden durch die Stirnwände kraftschlüssig in den ersten und zweiten Rohranschluss eingespannt werden kann. Damit wird einerseits eine elektrische Isolierung des Mediums im Innenrohr und andererseits eine zusätzliche Dichtung im Bereich der Anschlusskragen geschaffen.

Die Anschlusskragen können beispielsweise Befestigungsflansche von Isolierflanschen bilden oder innenliegende Anschlusskragen von Isolierstücken sein. Insofern lässt sich die Isolierverschraubung als Isolierflansch oder als Isolierstück umsetzen.

Es wird vorgeschlagen, dass ein elektrisch isolierender Mantel an dem Außenumfang des ersten Rohrleitungsabschnitts und/oder des zweiten Rohrleitungsabschnitts angeordnet ist. Damit wird eine zusätzliche elektrische Isolierung, insbesondere zum Schutz vor Kriechströmen, an der Außenseite mindestens einer der Rohrleitungsabschnitte bereitgestellt.

Ein erster Druckring ist auf den ersten Rohrleitungsabschnitt aufgeschoben, wobei der erste Druckring Bohrungen zur Aufnahme eines Befestigungselementes hat und ein äußerer Isolierring zwischen dem ersten Druckring und der Außenseite des ersten Anschlusskragens angeordnet ist. Mit Hilfe des Druckrings können die Anschlusskragen mit ihrem zwischenliegenden Isolierring über den Umfang gleichmäßig verteilt miteinander verspannt werden. Der äußere Isolierring verbessert die Dichtwirkung insbesondere im Betrieb unter sich verändernden Umweltbedingungen (insb. bei Temperaturwechsel und Feuchtigkeit).

Der äußere Isolierring und/oder der zwischenliegende Isolierring kann über den Außenumfang des ersten Anschlusskragens hinausragen und den Anschlusskragen umhüllen. Damit werden die Außenkragen umfangsseitig mit Isolierringmaterial umgeben. Die Verspannung muss dabei nicht mit den Außenkragen erfolgen, d.h. die Anschlusskragen müssen nicht durch über den Umfang verteilt angeordnete Bohrungen als Anschlussflansche ausgeführt sein. Die Anschlusskragen können Scheiben ohne Befestigungsmittel (z.B. ohne Bohrungen) sein.

Ein zweiter Druckring kann auf den zweiten Rohrleitungsabschnitt aufgeschoben sein. Der zweite Druckring kann Bohrungen zur Aufnahme eines Befestigungselementes haben und der zwischenliegende Isolierring im inneren radialen Bereich an dem ersten Anschlusskragen und im äußeren radialen Bereich an dem zweiten Druckring anliegen.

Die Verspannung der beiden Rohrleitungsabschnitt erfolgt dabei über zwei einander gegenüberliegende Druckringe, die mit Befestigungselementen, wie z.B. Schraubenbolzen, gegeneinander verschraubt werden. Im Zwischenraum zwischen den Druckringen ist zumindest der zwischenliegende Isolierring und die beiden Außenkragen sowie optional ggf. mindestens ein weiterer äußerer Isolierring angeordnet.

Es können über den Umfang verteilt Befestigungsbolzen durch jeweils fluchtende Bohrungen im ersten Druckring, äußeren Druckring und zwischenliegenden Druckring und im zweiten Druckring hindurchgeführt und die Druckringe gegeneinander mit den Befestigungsbolzen verspannt sein. Als Befestigungsbolzen können Gewindebolzen (d.h. Gewindestangen) mit Muttern jeweils an den beiden einander gegenüberliegenden Endbereichen oder Gewindeschrauben mit einem Schraubenkopf an einem Ende und mindestens einer Mutter auf dem gegenüberliegenden Endbereich sein.

Der erste und/oder zweite Druckring können sternförmig vom Innenrohr abragende Befestigungsarmabschnitte hat, wobei die Befestigungsarmabschnitte jeweils Bohrungen aufweisen. Die umlaufende Dichtung wird dabei mit dem ringförmigen Kernbereich im Kraftnebenschluss und die Verspannung an den sternförmigen Endbereichen des mindestens einen Druckrings im Krafthauptschluss bewirkt.

Der zweite Anschlusskragen kann Gewindesacklöcher als Bohrungen aufweisen. Dann sind Befestigungsbolzen durch Bohrungen des als Anschlussflansch ausgebildeten ersten Anschlusskragens und/oder eines ersten Druckrings hindurchgeführt und in jeweils eines der Gewindesacklöcher eingeschraubt, um den zweiten Anschlusskragen bzw. Anschlussflansch mit dem ersten Anschlusskragen bzw. Anschlussflansch zu verspannen. Dies erlaubt eine kompakte Bauform mit erleichterter Montage, bei der nur an der Seite der Befestigungsbolzen, die dem in die Gewindesacklöcher eingeschraubten Ende gegenüberliegt, geschraubt werden muss. Ein Schrauben und Gegenhalten, wie bei zwei Muttern an den einander gegenüberliegenden Enden, ist nicht erforderlich.

Jeweils eine Wellringdichtung umgibt das Innenrohr radial und ist im Abstand zum Innenrohr zwischen den zugeordneten ersten oder zweiten Anschlusskragen und dem zwischenliegenden Isolierring angeordnet. Eine zuverlässige Abdichtung kann im Kraftnebenschluss mit Hilfe der Wellringdichtungen erreicht werden.

Die Erfindung wird nachfolgend anhand von Ausführungsbeispielen beispielhaft näher erläutert. Es zeigen:
- Fig. 1 -: Längsschnittansicht einer ersten Ausführungsform einer gasdichten Isolierverschraubung;
- Fig. 2 -: perspektivische Schnittansicht der Isolierverschraubung aus Figur 1;
- Fig. 3 -: perspektivische Schnittansicht der Isolierverschraubung aus Figur 1;
- Fig. 4 -: Längsschnittansicht einer zweiten Ausführungsform einer gasdichten Isolierverschraubung;
- Fig. 5 -: perspektivische Schnittansicht der Isolierverschraubung aus Figur 4.

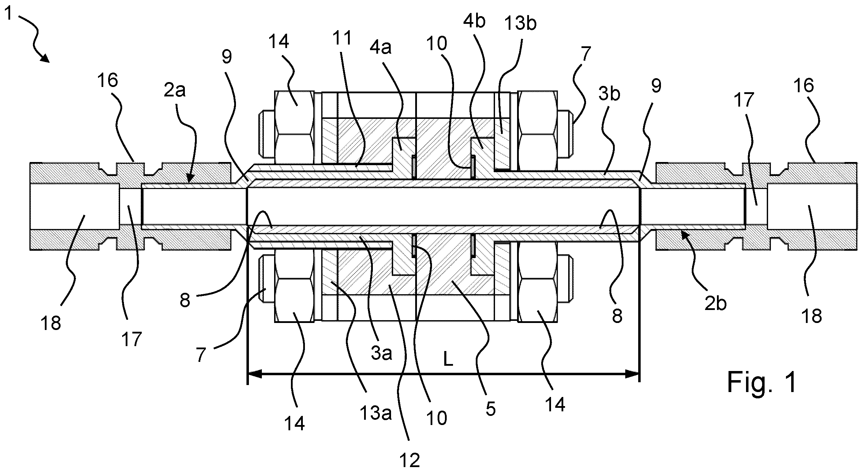

Figur 1 lässt eine Längsschnittansicht einer ersten Ausführungsform einer gasdichten Isolierverschraubung 1 erkennen.

Die Isolierverschraubung 1 hat einen ersten Rohranschluss 2a mit einem ersten Rohrleitungsabschnitt 3a und einem ersten Anschlusskragen 4a an seinem Ende. Der ersten Anschlusskragen 4a ragt radial von dem Rohr des ersten Rohranschlusses 2a ab und ist als umlaufende Scheibe ausgebildet.

Weiterhin ist ein zweiter Rohranschluss 2b mit einem zweiten Anschlusskragen 4b vorhanden. Die beiden Rohranschlüsse 2a, 2b sind mit ihren Anschlusskragen 4a, 4b in einer Flucht so ausgerichtet, dass die aufeinander zuweisenden Anschlussflächen einen zwischenliegenden Isolierring 5 aufnehmen und zusammen mit dem Isolierring 5 kraftschlüssig aufeinandergepresst sind.

Hierzu haben die Anschlusskragen 4a, 4b ebenso wie der zwischenliegende Isolierring 5 fluchtenden Bohrungen 6 zur Aufnahme jeweils eines Befestigungselementes 7 auf. Durch eine Gruppe fluchtender Bohrungen 6 (d.h. Befestigungsbohrungen) erstreckt sich jeweils ein Befestigungselement 7, bspw. in Form eines Gewindebolzens oder einer Gewindeschraube mit Schraubenkopf an einem Ende, mit dem die beiden Rohranschlüsse 2a, 2b mit dem zwischenliegenden Isolierring 5 kraftschlüssig miteinander verspannt werden.

In dem ersten und zweiten Rohranschluss 2a, 2b ist ein elektrisch isolierendes, gasdichtes Innenrohr 8 aufgenommen, das sich mindestens teilweise durch die Anschlusskragen 4a, 4b erstreckt. Die stirnseitigen Enden des Innenrohres 8 liegen an Stirnwänden 9 im Innenraum der Rohranschlüsse 2a, 2b an, so dass das Innenrohr 8 kraftschlüssig in den beiden miteinander verbundenen Rohranschlüssen 2a, 2b verspannt werden kann.

Das Innenrohr 8 ist im Bereich der Anschlussflächen der ersten und zweiten Anschlusskragen 4a, 4b jeweils von einem in eine Nut der Anschlusskragen 4a, 4b eingelegte Wellringdichtung 10 umgeben. Die Wellringdichtungen 10 sind zwischen einem jeweiligen Anschlusskragen 4a, 4b und dem zwischenliegenden Isolierring 5 angeordnet, um eine gasdichte Abdichtung im Kraftnebenschluss bereitzustellen.

Der erste Rohrleitungsabschnitt 3a trägt auf seinem Außenumfang einen Mantel 11 aus Isolierstoff, der eine zusätzliche elektrische Isolierung insbesondere als Schutz vor Kriechströmen und vor äußerem Stromüberschlag bereitstellt.

Ein äußerer Isolierring 12 umgibt einen Teilabschnitt des ersten Rohrleitungsabschnitts 3a umfangsseitig an der Außenseite des Mantels 11. Der äußere Isolierring 12 liegt an der Außenseite des ersten Anschlusskragens 4a an, die dem zweiten Anschlusskragen 4b abgewandt ist und umgibt den ersten Anschlusskragen 4a umfangsseitig. Damit liegt der radial äußere Bereich des äußeren Isolierrings 12 an dem zwischenliegenden Isolierring 5 an, um dort im Krafthauptschluss miteinander verspannt zu werden.

Ein erster Druckring 13a liegt an der dem ersten Anschlusskragen 4a gegenüberliegenden Anlagefläche des äußeren Isolierrings 12 an. Auf der gegenüberliegenden Seite liegt ein zweiter Druckring 13b an der Außenseite des zweiten Anschlusskragens 4b und der radial darüber angeordneten Anlagefläche des zwischenliegenden Isolierrings 5 an. Die beiden Druckringe 13a, 13b sowie der äußere Isolierring 12 und der zwischenliegende Isolierring 5 haben fluchtende Bohrungen 6, durch die jeweils ein Befestigungselement 7 in Form eines Gewindebolzens eingesteckt ist. Durch Muttern 14 an den einander gegenüberliegenden Endbereichen der Befestigungselemente 7, ggf. mit zusätzlichen zwischenliegenden Unterlegscheiben, werden die beiden Druckringe 13a, 13b aufeinander zu gezogen, um im Endzustand die Isolierringe 5, 12 gegeneinander kraftschlüssig zu verspannen.

Die Anschlusskragen 4a, 4b werden dabei indirekt im Kraftnebenschluss miteinander verspannt.

An die durch die Stirnwände 9 und die Länge des Innenrohrs 8 definierte effektive Länge L der montierten Isolierverschraubung schließen sich Anschlussenden der ersten und zweiten Rohrleitungsabschnitte 3a, 3b an, die in eine Rohrverschraubung 16 eingebaut sind. Die Rohrverschraubungen 16 haben jeweils einen Übergangsbereich 17 und in Erstreckungsrichtung, d.h. in Strömungsrichtung, beidseits daran anschließende Rohraufnahmebereiche 18. Der Durchmesser der Rohraufnahmebereiche 18 entspricht dem Außendurchmesser der Rohrleitungsabschnitte 3a, 3b und ist größer als der Innendurchmesser des Rohrabschnitts im Übergangsbereich 17. Damit wird ein Anschlag mit einer Aufnahmebegrenzung für die eingesteckten Rohrabschnitte bereitgestellt.

Die Rohrverschraubung 16 kann an ihrer Außenseite eine Mehrkantkontur haben, um die Rohrverschraubung 16 in die Rohrabschnitte einzuschrauben. Hierzu können die Rohraufnahmebereiche 18 Innengewinde haben. Denkbar ist aber auch die Aufnahme mindestens eines Rohrabschnitts mit einer Presspassung in den zugeordneten Rohraufnahmebereich 18. Die Rohrverschraubung 16 kann aber auch mit mindestens einem der Rohrabschnitte verlötet oder verschweißt sein.

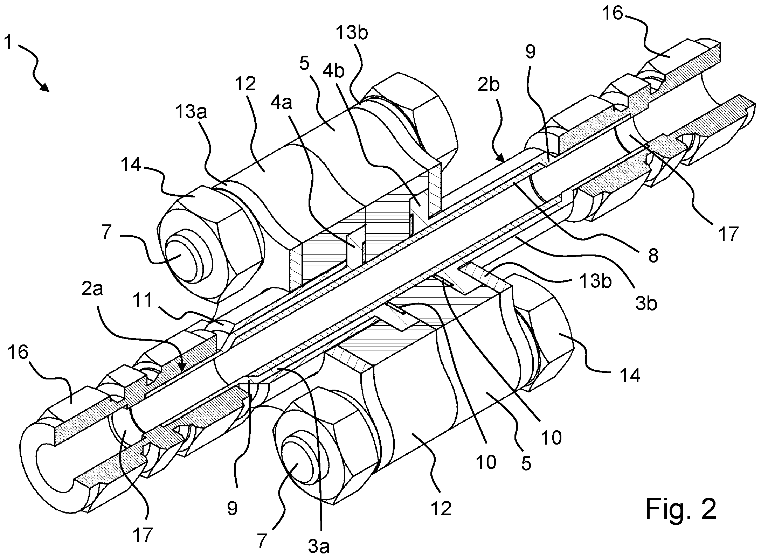

Figur 2 zeigt eine perspektivische Schnittansicht der Isolierverschraubung 1 aus Figur 1.

Es ist erkennbar, dass sich das Innenrohr 8 zwischen den Stirnwänden 9 in dem im Durchmesser verbreiterten Teil des ersten und zweiten Rohrleitungsabschnitts 3a, 3b erstreckt. Das Innenrohr 8 kann konisch zulaufende Enden mit jeweils einer Schrägfläche haben, die der Abschrägung der Stirnwände 9 entspricht.

Deutlich wird auch, dass der erste und zweite Druckring 13a, 13b sternförmig ausgebildet ist, wobei von einem zentralen Bereich Befestigungsarmabschnitte in unterschiedliche Richtungen abragen. Die Befestigungsabschnitte haben jeweils eine Bohrung zur Aufnahme des Befestigungselementes 7. Der äußere Isolierring 12 und der zwischenliegende Isolierring 5 haben eine entsprechende sternförmige Kontur.

Der auf dem ersten Rohrleitungsabschnitt 3a aufgebrachte Mantel 11 erstreckt sich bis zum ersten Anschlusskragen 4a.

Deutlich wird zudem, dass der zweite Druckring 13b auf der Außenseite des zweiten Anschlusskragens 4b aufliegt und den zweiten Anschlusskragen 4b radial überragt. Der zwischenliegende Isolierring 5 und der äußere Isolierring 12 decken jeweils den zugeordneten Anschlusskragen 4a, 4b radial nach oben ab, indem ein Abdeckabschnitt überragt. Mit anderen Worten haben die Isolierringe 5, 12 eine Vertiefung zur Aufnahme der Anschlusskragen 4a, 4b.

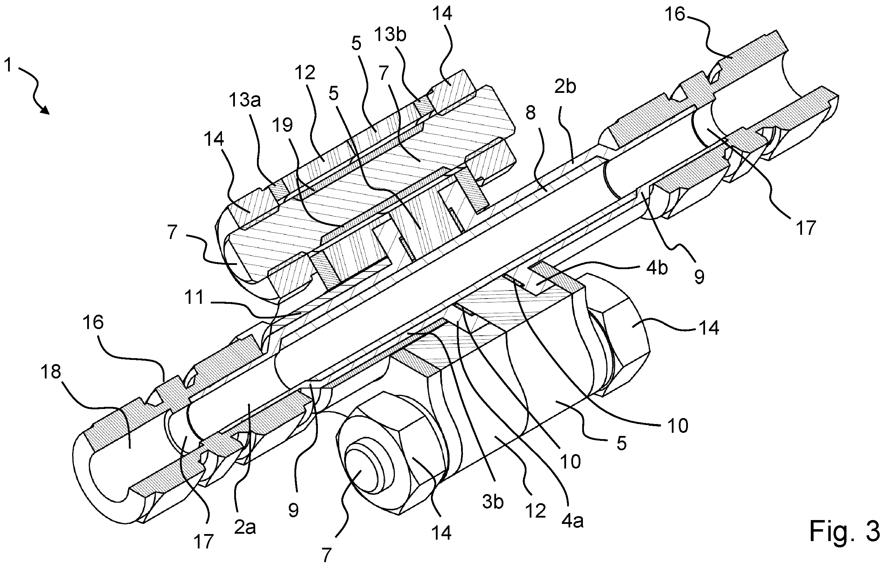

Figur 3 zeigt eine weitere perspektivische Schnittansicht der Isolierverschraubung 1 aus Figur 1.

Es ist erkennbar, dass ein Isoliermantel 19 jeweils auf die Befestigungselemente 7 aufgeschoben ist, der diese jeweils umfangsseitig umschließt. Damit sind die Befestigungselemente 7 insbesondere im Bereich der Anschlusskragen 4a, 4b zusätzlich elektrisch isoliert. Die Anschlusskragen 4a, 4b haben einen Radius, der vor dem Isoliermantel 19 endet, so dass der Isoliermantel 19 und vorzugsweise noch ein Teil des Isolierrings 5, 12 zwischen dem Anschlusskragen 4a, 4b und dem Befestigungselement 7 angeordnet ist.

Es ist weiter erkennbar, dass die oben erwähnten optionalen Unterlegscheiben 15 auch integral als scheibenförmiger Abschnitt der Muttern 14 ausgeführt sein können. Denkbar ist aber auch die Verwendung separater Unterlegscheiben oder von auch der Schraubensicherung dienenden Federscheiben.

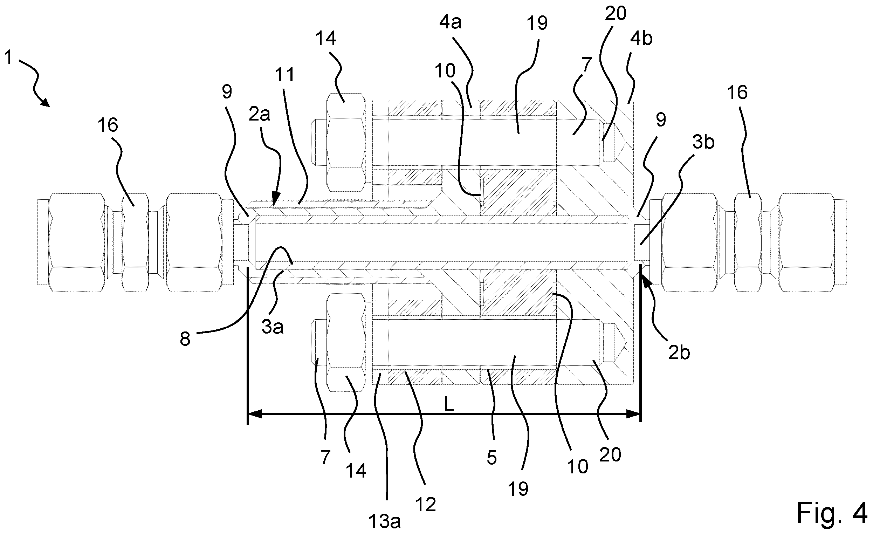

Figur 4 lässt eine Längsschnittansicht einer zweiten Ausführungsform einer gasdichten Isolierverschraubung 1 erkennen. Hierbei handelt es sich um eine rohrförmige Isolierverschraubung.

Der zweite Rohranschluss 2b ist aus dem zweiten Anschlusskragen 4b und einem integral damit ausgeformten zweiten Rohrleitungsabschnitt 3b gebildet, auf den eine Rohrverschraubung unmittelbar benachbart zum zweiten Anschlusskragen 4b aufgesetzt ist. Der zweite Anschlusskragen 4b ist als Anschlussflansch ausgebildet und hat über den Umfang verteilte Gewindesacklöcher 20, in die ein Gewindeende eines Befestigungselementes in Form eines Gewindebolzens (wie dargestellt) oder einer Gewindeschraube eingeschraubt wird.

Wiederum ist ein zwischenliegender Isolierring 5 zwischen den aufeinander zu weisenden Anschlussflächen des ersten und zweiten Anschlusskragen 4a, 4b angeordnet.

Der zweite Anschlusskragen 4b hat eine Stirnwand 9, bspw. eine konisch zulaufende Schräge.

Der erste Rohranschluss 2a ist hingegen vergleichbar zum ersten Ausführungsbeispiel aufgebaut. Das Innenrohr 8 erstreckt sich zwischen den Stirnwänden 9 des ersten und zweiten Rohranschlusses 2a, 2b. Dabei endet das Innenrohr 8 im zweiten Anschlusskragen 4b an der dortigen Stirnwand 9, ohne sich vollständig durch den Anschlusskragen 4b hindurch zu erstrecken.

Deutlich wird weiterhin, dass die Befestigungselemente 7 jeweils einen Isoliermantel 19 tragen, der sich durch den ebenfalls als Anschlussflansch ausgebildeten ersten Anschlusskragen 4a bis zum zweiten Anschlusskragen 4b erstreckt.

Im Radium zwischen dem Außenumfang des Innenrohrs 8 und den Befestigungselementen 7 ist jeweils eine Wellringdichtung 10 an der Auflagefläche zwischen dem ersten oder zweiten Anschlusskragen 4a, 4b und dem zwischenliegenden Isolierring 5 angeordnet.

Der äußere Isolierring 12 liegt an der dem zweiten Anschlusskragen 4b abgewandten Außenseite des ersten Anschlusskragens 4a an. Er liegt zwischen dem ersten Druckring 13a und dem ersten Anschlusskragen 4a.

In diesem Ausführungsbeispiel sind der erste Druckring 13a, die Isolierringe 12 und die beiden Anschlusskragen 4a, 4b kreisförmig. Sie können denselben Durchmesser haben.

Zur Verbesserung der elektrischen Isolierung ist aber auch denkbar, dass die Anschlusskragen 4a, 4b radial außen von überstehenden Abschnitten der Isolierringe 5, 12 überdeckt sind.

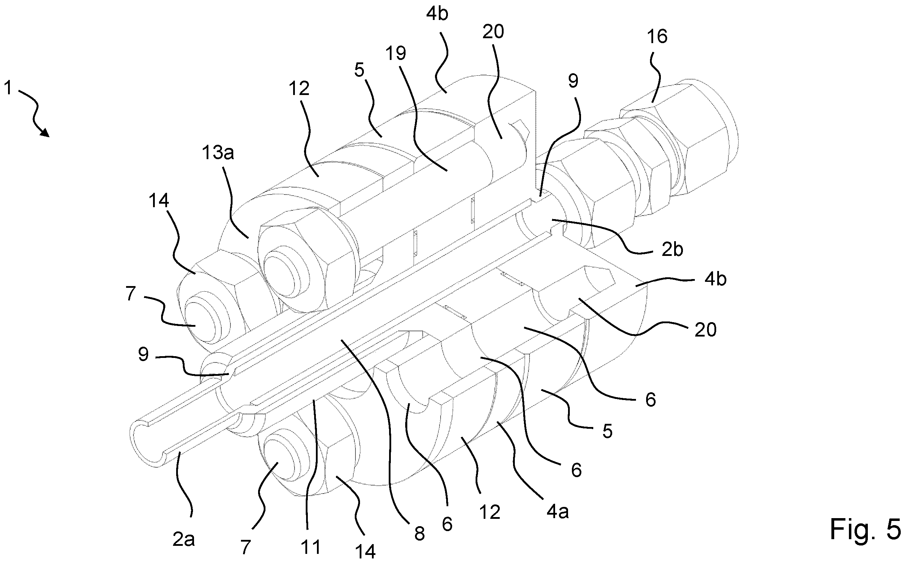

Figur 5 zeigt eine perspektivische Schnittansicht der Isolierverschraubung 1 aus Figur 4.

Es wird deutlich, dass die Isolierverschraubung 1 eine zylinderförmige Kontur hat. Umfangsseitig verteilt sind Bohrungen 6 vorhanden, wobei in eine fluchtende Anordnung der Bohrungen 6 im ersten Druckring 13a, äußeren Isolierring 12, ersten Anschlusskragen 4a (in Form eines Anschlussflansches), zwischenliegenden Isolierring 5 und zweiten Anschlusskragen 4b (in Form eines Anschlussflansches) jeweils ein Befestigungselement 7 eingeschraubt ist. Die Bohrungen 6 im zweiten Anschlusskragen 4b sind als Gewindesackbohrungen 20 ausgeführt.

Die als Gewindebolzen ausgeführten Befestigungselemente 7 werden nur auf der Seite des ersten Druckrings 13a mit Hilfe von Muttern 14 verschraubt, um den ersten Druckring 13a kraftschlüssig mit dem zweiten Anschlusskragen 4b zu verspannen. Dabei wird eine Druckkraft auf die zwischenliegenden Isolierringe 5, 12 und ersten Anschlusskragen 4a ausgeübt. Anstelle der dargestellten Gewindebolzen können auch Schrauben, wie Sechskantschrauben, Inbusschrauben etc., zur Anwendung kommen.

Die radial innerhalb des durch die Befestigungselemente 7 begrenzten Radius liegenden Wellringdichtungen 10 werden im Kraftnebenschluss beaufschlagt.

Für alle beschriebenen Ausführungsbeispiele können die Isolierringe 5, 12, d.h. die Isolierstücke, aus einem Isoliermaterial mit Abnahmeprüfzeugnis APZ 3.1 nach EN 10204 gebildet sein.

Die Druckringe 13a, 13b, Befestigungselemente 7 und Muttern 14 können aus Edelstahl gebildet sein. Die Wellringdichtungen 10 können vorteilhaft eine beidseitige Graphitauflage haben.

Die Isoliermäntel 11, 19 können bevorzugt aus einer hochfesten Isolierung, bspw. aus Polyolefine gebildet sein. Sie haben vorzugsweise eine Schichtdicke von mindestens 2,0 mm.

### Bezugszeichenliste

- 1: Isolierverschraubung
- 2a: erster Rohranschluss
- 2b: zweiter Rohranschluss
- 3a: erster Rohrleitungsabschnitt
- 3b: zweiter Rohrleitungsabschnitt
- 4a: erster Anschlusskragen
- 4b: zweiter Anschlusskragen
- 5: zwischenliegender Isolierring
- 6: Bohrung
- 7: Befestigungselement
- 8: Innenrohr
- 9: Stirnwand
- 10: Wellringdichtung
- 11: Mantel
- 12: äußerer Isolierring
- 13a: erster Druckring
- 13b: zweiter Druckring
- 14: Mutter
- 16: Rohrverschraubung
- 17: Übergangsbereich
- 18: Rohraufnahmebereich
- 19: Isoliermantel
- 20: Gewindesackloch

## Patentansprüche

1. Gasdichte Isolierverschraubung (1) für eine Rohrleitung mit einem ersten Rohranschluss (2a) und einem gegenüberliegenden zweiten Rohranschluss (2b), wobei der erste Rohranschluss (2a) einen ersten Rohrleitungsabschnitt (3a) und einen von dem ersten Rohrleitungsabschnitt (3a) radial abragenden ersten Anschlusskragen (4a) und der zweite Rohranschluss (2a) einen zweiten Rohrleitungsabschnitt (3b) und einen von dem zweiten Rohrleitungsabschnitt (3b) radial abragenden zweiten Anschlusskragen (4b) aufweisen, und wobei die beiden ersten und zweiten Anschlusskragen (4a, 4b) mit einem zwischenliegenden Isolierring (5) gegeneinander verspannt sind, wobei sich ein Innenrohr (8) aus einem elektrisch isolierenden Isolierstoffmaterial in dem ersten und zweiten Rohranschluss (2a, 2b) erstreckt, und wobei der erste und zweite Rohranschluss (2a, 2b) jeweils eine Stirnwand (9) an einer Durchmesserverringerung aufweisen und die einander gegenüberliegenden Enden des Innenrohrs (8) an den Stirnwänden (9) anliegen, **dadurch gekennzeichnet, dass** jeweils eine Wellringdichtung (10) das Innenrohr (8) radial umgibt, wobei eine erste Wellringdichtung (10) im Abstand zum Innenrohr (8) zwischen dem zugeordneten ersten Anschlusskragen (4a) und dem zwischenliegenden Isolierring (5) und eine zweite Wellringdirchtung (10) zwischen dem zugeordneten zweiten Anschlusskragen (4b) und dem zwischenliegenden Isolierring (5) angeordnet ist, dass ein elektrisch isolierender Mantel (11) an dem Außenumfang des ersten Rohrleitungsabschnitts (3a) und/oder des zweiten Rohrleitungsabschnitts (3b) angeordnet ist, und dass ein erster Druckring (13a) auf den ersten Rohrleitungsabschnitt (3a) aufgeschoben ist, wobei der erste Druckring (13a) Bohrungen (6) zur Aufnahme eines Befestigungselementes (7) hat und ein äußerer Isolierring (12) zwischen dem ersten Druckring (13a) und der dem zweiten Anschlusskragens (4b) abgewandten Anschlussfläche des ersten Anschlusskragens (4a) angeordnet ist und der erste Druckring (13a) mit einem zweiten Druckring (13b) oder dem zweiten Anschlusskragen (4b) mit dem Befestigungselement (7) verspannt ist.

2. Gasdichte Isolierverschraubung (1) nach Anspruch 1, **dadurch gekennzeichnet, dass** der äußere Isolierring (12) und/oder der zwischenliegende Isolierring (5) über den Außenumfang des ersten Anschlusskragens (4a) hinausragt und den ersten Anschlusskragens (4a) umhüllt.

3. Gasdichte Isolierverschraubung (1) nach einem der vorhergehenden Ansprüche, **dadurch gekennzeichnet, dass** ein zweiter Druckring (13b) auf den zweiten Rohrleitungsabschnitt (3b) aufgeschoben ist, wobei der zweite Druckring (13b) Bohrungen (6) zur Aufnahme eines Befestigungselementes (7) hat und der zwischenliegende Isolierring (5) im inneren radialen Bereich an dem ersten Anschlusskragen (4a) und im äußeren radialen Bereich an dem zweiten Druckring (13b) anliegt.

4. Gasdichte Isolierverschraubung (1) nach Anspruch 3, **dadurch gekennzeichnet, dass** über den Umfang verteilt Befestigungsbolzen (7) durch jeweils fluchtende Bohrungen (6), die im ersten Druckring (13a), im äußeren Isolierring (12), im zwischenliegenden Isolierring (5) und im zweiten Druckring (13b) vorhanden sind, hindurchgeführt und die Druckringe (13a, 13b) gegeneinander mit den Befestigungsbolzen (7) verspannt sind.

5. Gasdichte Isolierverschraubung (1) nach einem der Ansprüche 3 oder 4, **dadurch gekennzeichnet, dass** der erste und/oder zweite Druckring (13a, 13b) sternförmig vom Innenrohr (8) abragende Befestigungsarmabschnitte hat, wobei die Befestigungsarmabschnitte jeweils Bohrungen (6) aufweisen.

6. Gasdichte Isolierverschraubung (1) nach einem der vorhergehenden Ansprüche, **dadurch gekennzeichnet, dass** der zweite Anschlusskragen (4b) Gewindesacklöcher (20) als Bohrungen (6) aufweist und Befestigungsbolzen (7) durch Bohrungen (6) des als Anschlussflansch ausgeführten ersten Anschlusskragens (4a) und/oder eines ersten Druckrings (13a) hindurchgeführt und in jeweils eines der Gewindesacklöcher (20) eingeschraubt sind, um den zweiten Anschlusskragen (4b) mit dem ersten Anschlusskragen (4a) zu verspannen.

7. Gasdichte Isolierverschraubung (1) für eine Rohrleitung mit einem ersten Rohranschluss (2a) und einem gegenüberliegenden zweiten Rohranschluss (2b), wobei der erste Rohranschluss (2a) einen ersten Rohrleitungsabschnitt (3a) und einen von dem ersten Rohrleitungsabschnitt (3a) radial abragenden ersten Anschlusskragen (4a) und der zweite Rohranschluss (2a) einen zweiten Rohrleitungsabschnitt (3b) und einen von dem zweiten Rohrleitungsabschnitt (3b) radial abragenden zweiten Anschlusskragen (4b) aufweisen, und wobei die beiden ersten und zweiten Anschlusskragen (4a, 4b) mit einem zwischenliegenden Isolierring (5) gegeneinander verspannt sind, wobei ein erster Druckring (13a), der Bohrungen (6) zur Aufnahme eines Befestigungselementes (7) hat, auf den ersten Rohrleitungsabschnitt (3a) aufgeschoben ist und ein zweiter Druckring (13b), der Bohrungen (6) zur Aufnahme eines Befestigungselementes (7) hat, auf den zweiten Rohrleitungsabschnitt (3b) aufgeschoben ist, wobei der zweite Druckring (13b) und der zwischenliegende Isolierring (5) im inneren radialen Bereich an dem ersten Anschlusskragen (4a) und im äußeren radialen Bereich an dem zweiten Druckring (13b) anliegt, **dadurch gekennzeichnet, dass** jeweils eine Wellringdichtung (10) zwischen dem zugeordneten ersten oder zweiten Anschlusskragen (4a, 4b) und dem zwischenliegenden Isolierring (5) angeordnet ist und dass ein äußerer Isolierring (12) zwischen dem ersten Druckring (13a) und der dem zweiten Anschlusskragen (4b) abgewandten Anschlussfläche des ersten Anschlusskragens (4a) angeordnet ist, und dass der äußere Isolierring (12) und der zwischenliegende Isolierring (5) über den Außenumfang des ersten Anschlusskragens (4a) hinausragt und den ersten Anschlusskragen (4a) umhüllt, , und dass über den Umfang verteilt Befestigungsbolzen (7) durch jeweils fluchtende Bohrungen (6), die im ersten Druckring (13a), im äußeren Isolierring (12), im zwischenliegenden Isolierring (5) und im zweiten Druckring (13b) vorhanden sind, hindurchgeführt und die Druckringe (13a, 13b) gegeneinander mit den Befestigungsbolzen (7) verspannt sind, wobei der radial äußere Bereich des äußeren Isolierrings (12) an dem zwischenliegenden Isolierring (5) anliegt, um dort im Krafthauptschluss miteinander verspannt zu werden.

8. Gasdichte Isolierverschraubung (1) nach Anspruch 7, **dadurch gekennzeichnet, dass** ein elektrisch isolierender Mantel (11) an dem Außenumfang des ersten Rohrleitungsabschnitts (3a) und/oder des zweiten Rohrleitungsabschnitts (3b) angeordnet ist.

9. Gasdichte Isolierverschraubung (1) nach einem der Ansprüche 7 oder 8, **dadurch gekennzeichnet, dass** der erste und/oder zweite Druckring (13a, 13b) sternförmig vom Innenrohr (8) abragende Befestigungsarmabschnitte hat, wobei die Befestigungsarmabschnitte jeweils Bohrungen (6) aufweisen.
